# EUROPEAN PATENT SPECIFICATION

(11) **EP 0 808 565 B1**
(45) Date of publication and mention of the grant of the patent: **19.01.2000**
(21) Application number: 96918700.4
(22) Date of filing: 20.06.1996
(51) Int. Cl.: A01K 1/02

(54) **PREFABRICATED ARTIFICIAL BREADING UNITS FOR RABBITS**
VORGEFERTIGTE, KÜNSTLICHE ZUCHTABTEILUNG FÜR KANINCHEN
VIVIERS ARTIFICIELS PREFABRIQUES POUR LAPINS

(30) Priority: 14.11.1995 ES 9600575
(43) Date of publication of application: 26.11.1997
(73) Proprietor: Mayoral Marquez, Jesus Serafin, 29600 Marbella, Malaga (ES)
(72) Inventor: Mayoral Marquez, Jesus Serafin, 29600 Marbella, Malaga (ES)
(74) Representative: Naranjo Marcos, Maria Antonia
(86) International application number: ES9600136
(87) International publication number: WO9717838

(56) References cited:
- FR-A- 2 342 649
- FR-A- 2 534 113
- US-A- 5 289 795

## Description

### SUMMARY OF THE INVENTION:

"Prefabricated artificial housing devices for rabbits", made with light resistant material with optional circular, square or polygonal shape, which have therein thin walls forming a labyrinth, with corridors and spreading and breeding areas.

In the centre, the housing device is provided with a cover that has holes for ventilation; the sides have divergent openings to the outside of suitable sizes.

The modules that make up the housing device have individual covers at the top, which makes it easier to catch the animals for vaccination and sanitary prophylaxis of the "majano" or housing device.

The floor of these "majanos" or housing devices is the natural terrain and their walls and ceilings are rubbed with a layer of clay, which once dry makes them have identical texture to the natural warrens made by rabbits themselves under the ground.

### PREFABRICATED ARTIFICIAL HOUSING DEVICES FOR RABBITS"

The present invention provides "prefabricated artificial housing devices for rabbits" (see for example FR-A-2 534 113), built with light materials, such as PVC, polyester, galvanized iron, ceramics, polyethilene, polypropylene, light concrete or any other suitable materials, any desirable size and shape, e.g. circular, polygonal, rectangular or square, and constructed as modules to make it easier the production, transport and fitting the frames on the terrain.

It can be observed on the spot that there are farms and estates that have poor nurturing conditions and lack water but , surprisingly, still have rabbits, whereas there are others which do not lack the above mentioned but, however, they do not have a single animal. The reason for this characteristic is that the "habitat" is the crux of the matter.

In all the areas where, due to their specific features, the land is sandy, muddy or of soft texture the rabbits will be able to make their warrens; or if the terrain is rocky or has undergrowth that provides them with shelter, rabbits survive, despite the illnesses; although they have to defend themselves against predators, which are constantly threatening, and against men. That is to say, rabbits survive and breed only where they can find "habitat" or make their warrens.

This fact has led us to the opportunity of making artificial housing devices for rabbits, with the following features and advantages:
- Ideal houses for rabbits, rubbed therein with clay.
- Comfortable
- Provided with insulation, maintaining the ideal humidity level in their interior.
- Full resistance
- Water and snow proof
- Easy access to facilitate the animals' capture for VACCINATION
- Able to keep the rabbits free from parasites; Easily disinfected.
- Dead animals' corpses can be easily removed.
- Portable
- Easy fitting; only taking a few minutes
- Fire proof
- Perfect refuge place agains predators
- Long lasting
- Central locking
- Protected against ferreters
- Safe breeding within the housing
- Environmentally friendly; unnoticeable

So that rabbits get accustomed to living in their new habitat willingly, they only have to be locked in the housing for one or two days. Then, the openings to the outside will be opened. It will be noticed that, after this moment on, the animals will have occupied the majano in a permanent and natural way, and thus they will settle down in their new house.

The choice of the place where the majano is going to be fitted is something essential. Whenever possible, safe and sun exposed areas will be chosen. The texture of the terrain must be hard, to prevent rabbits from making passages under the frame of the housing, which would make it difficult to capture the animals for vaccination. On the other hand, the device will be placed far from trees, which can be winged predators' vantage points and where rabbits can find weeds or thicket, for they could hide or accommodate themselves there. Food and water must be easily accesible.

The advantages of the present invention can be obtained from the enclosed description that has been given for purposes of illustration and which should not be construed as liniting the scope of the present invention.

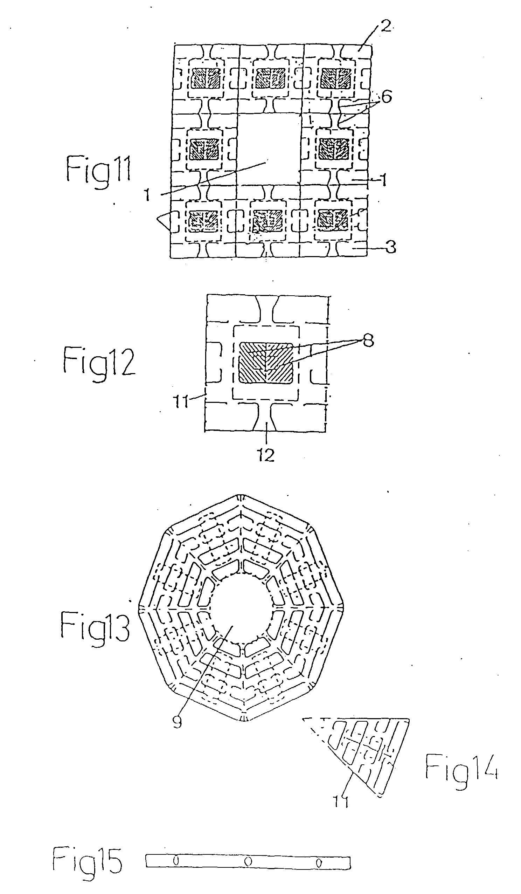

For a better understanding of what is claimed, there are example drawings enclosed, which do not limit the scope of the invention and where,

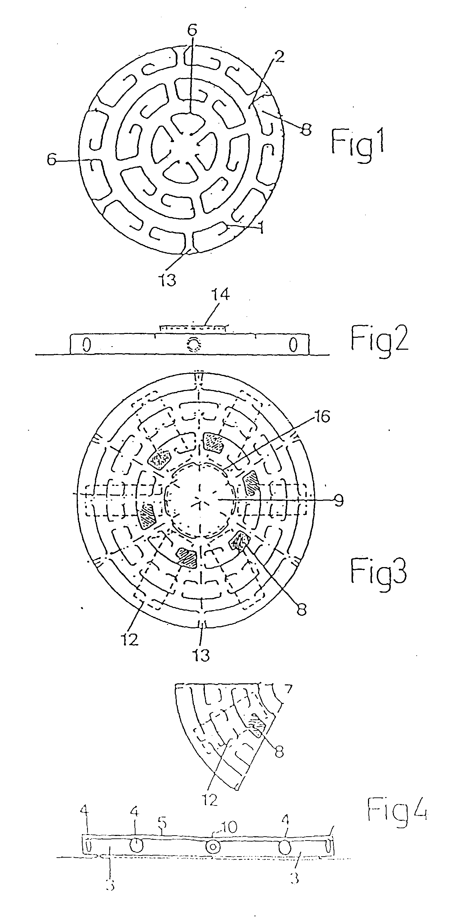

Fig. 1 is a housing device ground plan.
Fig. 2 is the same housing device elevation.
Fig. 3 is a ground plan of the same housing device of a bigger size
Fig. 4 is the elevation according to fig. 3
Fig. 5 is a ground plan of a housing device built in modules.
Fig. 6 is the ground plan of a module.
Fig. 7 is the elevation of this same housing device.
Fig. 8 is the ground plan of a bigger housing device built with modules.
Fig . 9 is the ground plan of a module
Fig. 10 is the elevation ofthe same housing device
Fig. 11 is the ground plan of a square housing device
Fig. 12 is the ground plan of a square module.
Fig. 13 is the illustration of the ground plan of an octogonal housing device.
Fig. 14 is the ground plan ofthe octogonal module

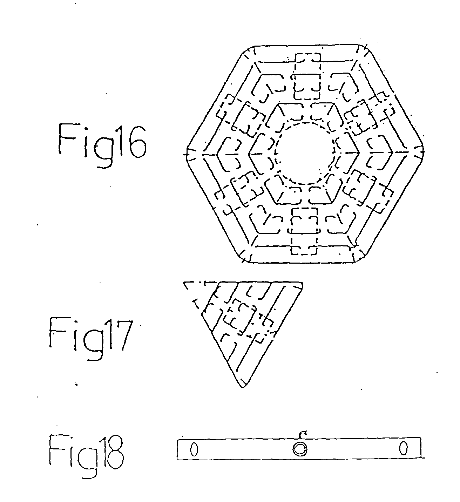

Fig. 15 is the elevation of a modular octogonal housing device
Fig. 16 is the ground plan of a hexagonal housing device
Fig 17 is the ground plan of the hexagonal module
Fig 18 is the elevation of a hexagonal housing device

According to the illustrations, the ground (1) of the housing device (2) is surrounded by an exterior wall (3) of about 20 cm high with doors at the sides (4) that have a circular or rectangular shape, that make it possible for the rabbits to go in and out.

The floor of the housing device will be the natural ground and the ceiling (5) will have attached to it the thin walls ( 6 ) that shape the labyrinth therein, with corridors ( 7 ) of about 15 to 20 cm wide, perfectly connected , and spreading and breeding areas ( 8 ) of different sizes also intercommunicated.

In the centre, there will be a circular, square or polygonal area ( 9) completely open and without walls , whose cover will permit the air to circulate for a suitable ventilation ( 18 ) .

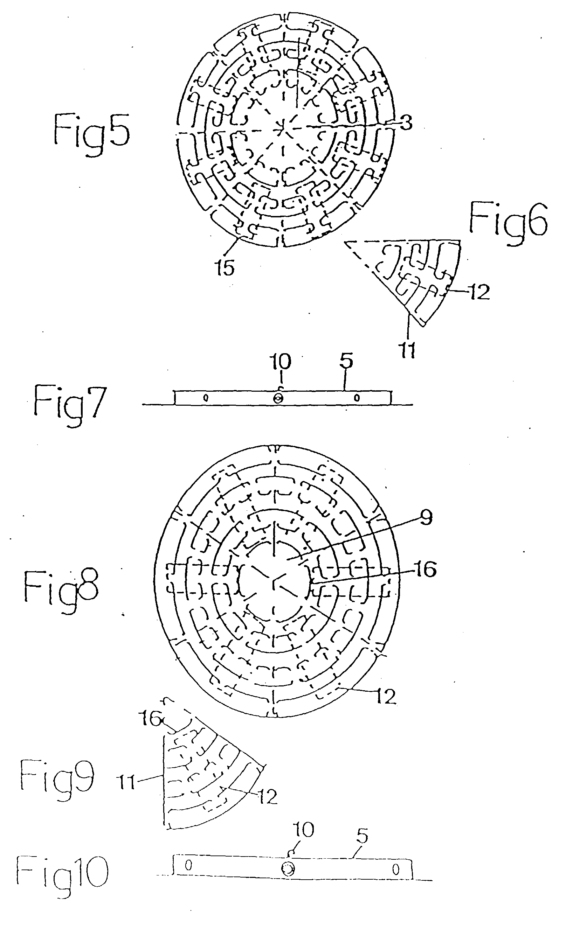

The modules (Fig 6 ) ( ref. 11) that make up the housing device will have a manhole on the upper part ( 12 ) leading to the different housings therein, and making it possible to watch, disinfect and capture the animals, as well as cleaning the housing device easily.

These modules will be put attached to one another, forming the desired shape and their covers will have the possibility of being closed by means or a steel wire whose ends will have a padlock.

The openings to the outside will be shaped as in (13), with a bigger angle in the outer part, so that they bear resemblance to natural warrens.

The centre of the housing device has a circular cover (14) that is attached by means of a flange existing on the smaller side of the module. In bigger housing devices, the central gap is surrounded by a wall (16) that is perpendicular to the ceiling ofthe housing device in a descending sense.

In the upper part of every module there is a rectangular (15) or square opening, with a flange that sticks out to the roof, where a cover that has a perpendicular descending flange is attached.

The upper part of the housing device can have some steel hooks anchored to it, so that steel wire can pass through them and thus the covers will be fixed and prevented from being opened. The ends of the wire will be padlocked.

Finally, after the previous description, it must be claimed that in the present invention there are lots of possible variations that do not alter the essence of what has been said, for the device can be made of different shapes,materials or sizes with no limitation of what has been claimed.

## Claims

1. "Prefabricated artificial housing devices for rabbits", comprising a circular, polygonal, rectangular or square body. The base of the housing device is the natural ground itself, and it is surrounded by an exterior wall (3) of about 20 cm high, with circular or rectangular openings to permit the passage of the rabbits at the sides (4).
The cover will have thin walls (6) making up a labyrinth therein, with corridors (7) about 15 to 20 cm wide, perfectly intercommunicated, and spreading (8) and breading areas of different sizes and also intercommunicated.
In the centre of the housing device there is a big circular, square or polygonal area (9) without walls, whose cover ( 10 ) will permit the air to circulate for a suitable ventilation.

2. "Prefabricated artificial housing devices for rabbits " according to claim 1, characterized in that the body has a polygonal shape and the base of the housing device is made up of the natural ground, and is surrounded by an exterior wall ( 3) of about 20 cm high, with circular or square openings (4) at the sides.
The upper part of the housing device will have attached to it some thin walls (6) that make up the labyrinth therein, with corridors (7) of about 15 to 20 cm wide, perfectly intercommunicated.
In the centre of the housing device there is a circular, square or polygonal area ( 9 ) completely open, without thin walls and whose cover (10) will have holes to permit the air to circulate for suitable ventilation.

3. "Prefabricated artificial housing devices for rabbits", according to claims 1 and 2 , characterized by having modules (fig. 6, ref. 11) that will have on top of them a movable cover.
These modules will be placed attached to one another, anchored, and their covers will offer the possibility of being locked by means of a steel wire whose ends will have a padlock.

4. "Prefabricated artificial housing devices for rabbits", according to the previous claims, characterized by having openings to the outside (4) which have a troncoconical shape (13), with a bigger angle in the outer part.

5. ""Prefabricated artificial housing devices for rabbits", according to the previous claims, characterized by the fact that the centre of the housing device has a circular cover (14) that can be attached to the smaller side of the module by means od a flange. In bigger housing devices, the central gap is surrounded by a peripheral thin wall (16) which is perpendicular to the ceiling of the housing device in a descending sense.

6. "Prefabricated artificial housing devices for rabbits" according to the previous claims, characterized by the fact that at the upper part of every module there is a rectangular (15) or square opening, with a flange that sticks out, which is perpendicular to the ceiling by its outer side, to which is attached a cover with another flange that is perpendicular , peripherial and descending.
On the top ofthe majano some optional steel hooks will be anchored, and a steel wire will be passed through them joining all the covers. The ends of the wire will be padlocked.

## Patentansprüche

1. Künstliche, vorgefertigte Gehege für Kaninchen, gekennzeichnet durch einen Körper, der eine kreisrunde, poligonale, rechteckige oder quadratische Form aufweisen kann. Den Boden des Geheges wird vom natürlichen Erdboden gebildet und von einer Aussenwand (3) umgeben, die circa 20 cm hoch ist und an den Seiten (4) rechteckige oder kreisrunde Öffnungen für den Durchgang der Kaninchen aufweist.
Die Decke besitzt dünne Wände oder Trennwände (6), die im Innern ein Labyrinth mit etwa 15 bis 20 cm breiten, perfekt miteinander verbundenen Gängen (7) sowie ebenfalls miteinander verbundene Ruhe- und Zuchtbereiche (8) verschiedener Abmessungen bilden.
In der Mitte des Geheges ist eine grosse runde, poligonale oder viereckige Fläche (9) ohne Trennwände vorgesehen, deren Deckel oder Abdeckung (10) die Luftumwälzung ermöglicht, um eine geeignete Ventilation zu gewährleisten.

2. Künstliche, vorgefertigte Gehege für Kaninchen, nach Anspruch 1 dadurch gekennzeichnet, dass der Körper eine poligonale Form aufweist, der Boden des Geheges vom natürlichen Erdboden gebildet und von einer Aussenwand (3) umgeben wird, die circa 20 cm hoch ist und an den Seiten (4) Öffnungen besitzt, die eine kreisrunde oder rechteckige Form haben können.
Der obere Bereich dieser Anordnung ist mit mehreren Wänden oder Trennwänden (6) verbunden, die im Innern ein Labyrinth mit perfekt miteinander verbundenen Gängen (7) von einer Breite zwischen 15 und 20 cm bilden.
In der Mitte des Geheges ist eine grosse runde, rechteckige oder poligonale Fläche (9) ohne Trennwände vorgesehen, deren Abdeckung (10) Öffnungen für die Luftumwälzung besitzt, um eine geeignete Ventilation zu gewährleisten.

3. Künstliche, vorgefertigte Gehege für Kaninchen, nach den Ansprüchen 1 und 2 dadurch gekennzeichnet, dass Module (Fig. 6, Ref. 11) vorgesehen sind, die in ihrem oberen Bereich eine abhehmbare Abdeckung bzw. einen Deckel aufweisen.
Diese Module werden nebeneinander angeordnet und verankert, während die Abdeckungen oder Deckel mit Hilfe eines Stahlseils verschlossen werden, an dessen Enden Vorhängeschlösser vorgesehen sind.

4. Künstliche, vorgefertigte Gehege für Kaninchen, nach den vorangehenden Ansprüchen dadurch gekennzeichnet, dass nach aussen hin (4) kegelstumpfförmige Öffnungen (13) vorgesehen sind, die in ihrem äusseren Bereich einen grösseren Winkel aufweisen.

5. Künstliche, vorgefertigte Gehege für Kaninchen, nach den vorangehenden Ansprüchen dadurch gekennzeichnet, dass das Gehege in der Mitte eine kreisrunde Abdeckung (4) aufweist, die an der kürzeren Seite des Moduls mit Hilfe einer Lasche einrastet. Bei grösseren Gehegen ist der mittlere Bereich von einer dünnen Umfangswand (16) umgeben, die in Abwärtsrichtung senkrecht zur Gehegedecke angeordnet wird.

6. Künstliche, vorgefertigte Gehege für Kaninchen, nach den vorangehenden Ansprüchen dadurch gekennzeichnet, dass im oberen bereich eines jeden Moduls eine rechteckige oder viereckige Öffnung (15) mit einer Lasche vorgesehen ist, die vorsteht und senkrecht zur Decke an der Aussenseite angeordnet ist, an der wiederum eine Abdeckung bzw. ein Deckel mit einer weiteren Lasche einrastet.
Im oberen Bereich der Anordnung können zusätzlich Haken angeordnet werden, durch die ein Stahlseil geführt wird, um alle Abdeckungen oder Deckel miteinander zu verbinden. Die Enden des Stahlseils werden mit einem Vorhängeschloss gesichert.

## Revendications

1. «Clapiers à lapins préfabriqués », caractérisés par un corps qui peut avoir une forme circulaire, polygonale, rectangulaire ou carrée. La base du clapier est constituée du terrain naturel et est entourée d'une paroi extérieure (3) de 20 cm de hauteur environ, dotée d'ouvertures rectangulaires ou circulaires sur les côtés (4) pour permettre le passage des lapins.
La toiture a des parois fines ou cloisons (6) qui forment un labyrinthe intérieur, avec des couloirs (7) d'une largeur de 15 à 20 cm environ, parfaitement communiqués entre eux, ainsi que des zones de repos (8) et d'allaitement de différentes mesures qui sont aussi reliées.
Au centre du clapier, il existe une grande zone circulaire, polygonale ou carrée (9) sans cloison, ni paroi, dont la couverture ou le plafond (10) permet à l'air de circuler pour une bonne aération.

2. Clapiers préfabriqués pour lapins, conformément à la première revendication, caractérisée en ce que le corps a une forme polygonale et la base du clapier est constituée par le terrain naturel qui est entouré d'une paroi extérieure (3) de 20 cm de hauteur environ dotée d'ouvertures latérales (4) qui peuvent être rectangulaires ou circulaires.
La partie supérieure de l'îlot comportera des parois ou cloisons fines (6) unies qui composent le labyrinthe intérieur, avec des couloirs (7) d'une largeur de 15 à 20 cm, parfaitement communiqués entre eux.
Au centre du clapier, il existe une zone circulaire, rectangulaire ou polygonale (9) entièrement ouverte, sans cloison et dont la couverture (10) est dotée de perforations pour permettre à l'air de circuler en vue d'une bonne aération.

3. «Clapiers à lapins préfabriqués », selon les revendications 1 et 2, caractérisés en ce qu'ils ont des modules (Fig. 6 Ref. 11) dotés sur leur partie supérieure d'un plafond ou d'une couverture démontable.
Ces modules seront placés les uns à coté des autres et fixés et leurs couvertures ou plafonds pourront être fermées au moyen d'un câble en acier aux extrémités duquel un cadenas sera mis.

4. «Clapiers à lapins préfabriqués », conformément aux revendications précédentes, caractérisés en ce qu'ils sont pourvus d'ouvertures à l'extérieur (4) de forme tronconique (13) ces ouvertures ont un plus grand angle sur leur partie extérieure.

5. «Clapiers à lapins préfabriqués », selon les revendications précédentes, caractérisés en ce que le centre du clapier a une couverture circulaire (14) qui peut s'encastrer sur le plus petit côté du module au moyen d'une languette. Dans les clapiers plus petits, l'espace central est entouré d'une cloison périphérique fine (16) qui est perpendiculaire au plafond du clapier dans le sens descendant.

6. «Clapiers à lapins préfabriqués», conformément aux revendications précédentes, caractérisés en ce que sur la partie supérieure de chaque module, il existe une ouverture rectangulaire ou carrée (15) avec une languette qui ressort et qui est perpendiculaire au plafond du côté extérieur, auquel s'emboîte aussi un plafond ou couvercle à l'aide d'une autre languette perpendiculaire périphérique descendante.
Sur la partie supérieure de l'îlot, des crochets peuvent être mis en sus et un câble d'acier peut passer à travers ces derniers pour raccorder tous les plafonds ou couvertures. Les extrémités du câble d'acier seront fermées à l'aide d'un cadenas.
